# DEMANDE DE BREVET EUROPEEN

(11) **EP 2 938 001 A1**
(43) Date de publication de la demande: **28.10.2015**
(21) Numéro de dépôt: 15164668.4
(22) Date de dépôt: 22.04.2015
(51) Int. Cl.: H04B 1/3888

(54) **DISPOSITIF DE PROTECTION D'APPAREIL ELECTRONIQUE PORTABLE**

(30) Priorité: 23.04.2014 FR 1453640; 23.04.2014 FR 1453639; 23.04.2014 FR 1453638
(71) Demandeur: Bigben Connected S.A.S., 59818 Lesquin Cedex (FR)
(72) Inventeur: Buffard, Cyril, 75018 Paris (FR)
(74) Mandataire: Vigand, Philippe

(57) **Abrégé**

Dispositif de protection d'appareil électronique portable comprenant :
- une coque de protection,
- au moins une façade amovible agencée pour être fixée sur la coque de protection,
caractérisé en ce que la coque de protection comprend :
- une paroi avec une face interne,
- au moins une empreinte de clipsage agencée dans la paroi et débouchant sur la face interne,
- au moins une ouverture d'accès à ladite au moins une empreinte de clipsage, dans la paroi,
et en ce que la façade amovible comprend au moins une patte de clipsage agencée pour pouvoir passer dans ladite au moins une ouverture d'accès et se clipser dans ladite au moins une empreinte de clipsage.

## Description

La présente invention concerne de manière générale un dispositif de protection d'appareil électronique portable et en particulier, un dispositif de protection de téléphone portable.

Il est connu dans l'art antérieur des dispositifs de protection d'appareils électroniques portables, en particulier pour les téléphones portables, ou tablettes tactiles. Certains de ces dispositifs de protection comprennent une façade amovible qui peut être attachée par des vis de fixation sur une coque support. En contrepartie de l'interchangeabilité des façades amovibles, ce système présente notamment l'inconvénient d'être complexe à mettre en oeuvre par l'utilisateur qui doit effectuer toute une série d'opérations minutieuses, et le coût total du dispositif est élevé, avec des taraudages et ajustements précis.

Un but de la présente invention est de répondre aux inconvénients mentionnés ci-dessus et en particulier, tout d'abord, de proposer un dispositif de protection pour appareil électronique portable et qui présente une façade amovible aisée à remplacer pour un utilisateur.

Pour cela un premier aspect de l'invention concerne un dispositif de protection d'appareil électronique portable comprenant :
- une coque de protection agencée pour recevoir l'appareil électronique portable,
- au moins une façade amovible agencée pour être fixée sur la coque de protection,
   caractérisé en ce que la coque de protection comprend :
- une paroi avec une face interne agencée pour être en regard de l'appareil électronique portable reçu par la coque de protection,
- au moins une empreinte de clipsage agencée dans la paroi et débouchant sur la face interne,
- au moins une ouverture d'accès à ladite au moins une empreinte de clipsage, dans la paroi,
et en ce que la façade amovible comprend au moins une patte de clipsage agencée pour pouvoir passer dans ladite au moins une ouverture d'accès et se clipser dans ladite au moins une empreinte de clipsage lorsque l'appareil électronique portable est reçu par la coque de protection. Le dispositif selon la présente invention comprend une empreinte de clipsage, ce qui signifie qu'il ne faut aucun outil pour la séparer ou l'attacher à la coque de protection, et de plus l'ouverture d'accès au travers de la paroi permet d'effectuer ces opérations de retrait ou mise en place avec l'appareil électronique portable déjà installé dans la coque de protection. L'invention selon cette mise en oeuvre procure donc une grande liberté de personnalisation, avec une grande facilité pour changer de façade amovible. Il est entendu que la coque de protection est une coque amovible distincte de l'appareil électronique portable, et en particulier, cette coque est distincte du capot de batterie de l'appareil électronique portable.

Avantageusement, l'empreinte de clipsage comprend au moins deux interfaces de clipsage chacune agencée d'un côté de l'ouverture d'accès, pour permettre à ladite au moins une patte de clipsage de se clipser d'un côté ou de l'autre de l'ouverture d'accès. En d'autres termes, une seule fente permet de clipser la façade amovible sur la coque selon plusieurs positions (on peut aisément la retourner). Cette interface de fixation est unique et donc simple et peu onéreuse à fabriquer. De plus, cette mise en oeuvre apporte une liberté pour l'utilisateur qui peut positionner la façade amovible selon différentes orientations. On peut envisager une ouverture carrée avec quatre interfaces de clipsage qui permettent de clipser la façade amovible selon quatre positions orientées à 90° les unes des autres.

Avantageusement, l'ouverture d'accès est une fente définissant un axe longitudinal, et l'empreinte de clipsage est symétrique par rapport à l'axe longitudinal de la fente. Selon ce mode de réalisation, la façade amovible peut être fixée dans un sens ou dans l'autre sur la coque de protection par rapport à la direction de symèrie. Elle peut donc être retournée tout en étant tout de même clipsable.

Avantageusement, l'empreinte de clipsage présente un centre de symétrie.

Avantageusement, ladite au moins une patte de clipsage présente une hauteur de patte, la paroi présente une épaisseur de paroi, et la hauteur de patte est inférieure à l'épaisseur de paroi. La patte de clipsage selon cette mise en oeuvre est complément intégrée dans l'épaisseur de la coque de protection.

Avantageusement, la façade amovible comprend une articulation et un rabat pour former un étui de protection de l'appareil électronique portable lorsqu'elle est clipsée sur la coque de protection. Selon cette mise en oeuvre, la façade amovible comprend une articulation, sur un de ses côtés, et un rabat y est attaché, ce qui permet de former un étui complet. En effet, la coque de protection recouvre et protège déjà une face de l'appareil électronique portable, et le rabat qui est fixé à la coque de protection via la façade amovible permet de protéger l'autre face, tout en pouvant s'en dégager grâce à l'articulation. Il va sans dire que l'articulation permet au rabat d'occuper une première position replié sur l'appareil électronique portable ou une deuxième position dans laquelle il laisse accès à l'appareil électronique portable. En combinaison avec la mise en oeuvre dans laquelle l'empreinte de clipsage présente deux interfaces de clipsage de part et d'autre de l'empreinte de clipsage, on peut fixer la façade amovible dans un sens ou dans un autre en la retournant, et obtenir ainsi un étui pour droitier ou pour gaucher.

Avantageusement, la façade amovible comprend une batterie auxiliaire pour augmenter l'autonomie de l'appareil électronique portable.

Avantageusement, la façade amovible comprend au moins un dispositif optique agencé pour s'ajuster sur un objectif d'appareil photo de l'appareil électronique portable, lorsque la façade amovible est clipsée sur la coque de protection recevant l'appareil électronique portable.

Avantageusement, la façade amovible est agencée pour se clipser selon deux positions différentes sur la coque de protection, et la façade amovible comprend deux dispositifs optiques chacun agencé pour s'ajuster sur l'objectif d'appareil photo de l'appareil électronique portable lorsque la façade est clipsée dans l'une des deux positions de clipsage sur la coque de protection. En d'autres termes, la façade amovible peut se clipser sur la coque de protection selon une première position, dans laquelle un premier dispositif optique (un objectif grand angle par exemple) recouvre l'objectif de l'appareil photo de l'appareil électronique portable, et la façade amovible peut se clipser sur la coque de protection selon une deuxième position, dans laquelle un deuxième dispositif optique (un objectif macro par exemple) recouvre l'objectif de l'appareil photo de l'appareil électronique portable. Il est fait mention de dispositif optique, et il est entendu que ce dispositif optique est monté sur la façade amovible : il en fait partie. Enfin, un tel dispositif optique comprend au moins une lentille, un prisme ou un miroir pour modifier un trajet d'une onde lumineuse qui sera ensuite reçue par l'objectif de l'appareil photo de l'appareil électronique portable.

Avantageusement, la façade amovible comprend au moins un haut parleur.

Avantageusement, la façade amovible comprend au moins une interface de fixation sur un pare brise de véhicule automobile. On peut envisager une ventouse.

Avantageusement, la façade amovible comprend au moins une interface de stockage d'un casque audio.

Avantageusement, la façade amovible comprend des moyens élastiques agencés entre deux portions d'ancrage et tendus au dessus d'au moins une partie d'une face externe de la façade amovible.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue éclatée d'un dispositif de protection selon la présente invention avec une coque de protection et une façade amovible ;
- la figure 2 représente le dispositif de protection de la figure 1, en position assemblée avec la façade amovible clipsée sur la coque de protection ;
- la figure 3 représente le dispositif de protection de la figure 2 avec la façade amovible clipsée dans une autre position ;
- la figure 4 représente un exemple de façade amovible avec un rabat ;
- la figure 5 représente un exemple de façade amovible avec des objectifs photos.

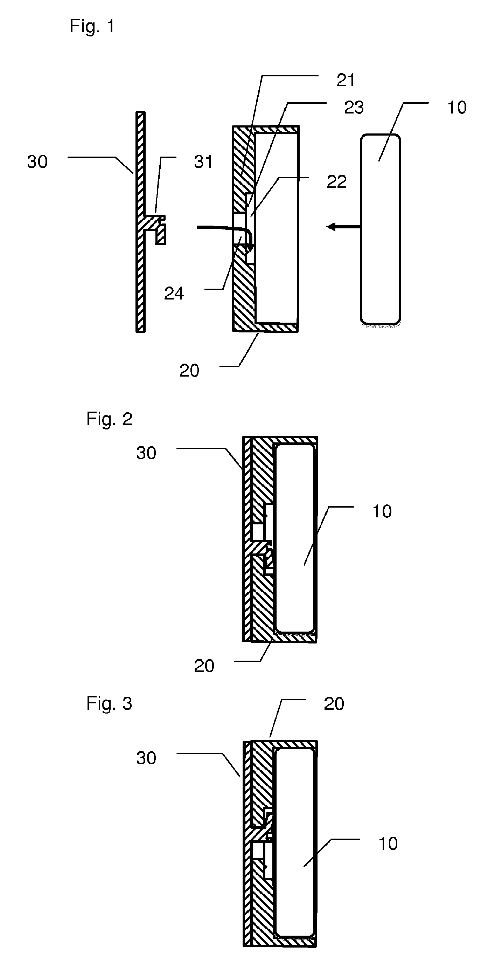

La figure 1 représente un dispositif de protection d'un téléphone portable 10, qui comprend une coque de protection 20 et une façade amovible 30. La coque de protection 20 comprend une paroi 21 avec une face interne en regard du téléphone portable 10. La paroi 21 comprend une empreinte de clipsage 22 qui débouche sur la face interne, et qui comprend deux interfaces de clipsage 23. Au niveau de l'empreinte de clipsage 22, une fente d'accès 24 forme une ouverture d'accès au travers de la paroi 21 depuis l'extérieur vers l'empreinte de clipsage 22.

Les interfaces de clipsage 23 sont agencées de part et d'autre de la fente d'accès 24.

La façade amovible 30 comprend quant à elle une patte de clipsage 31 qui est agencée pour pourvoir être introduite dans la fente d'accès 24, pour pouvoir se clipser dans l'empreinte de clipsage 22, sur l'une des interfaces de clipsage 23.

D'une manière classique, la coque de protection 20 comprend une cavité ajustée aux dimensions du téléphone portable 10, pour pouvoir le recevoir et ensuite former une enceinte de protection.

La figure 2 représente le dispositif de protection assemblé, avec le téléphone portable 10 reçu par la coque de protection 20. De plus, la façade amovible 30 est clipsée sur la coque de protection 20. On remarque que la patte de clipsage 31 est noyée dans l'empreinte de clipsage 22, de sorte que l'on peut clipser ou déclipser la façade amovible 30 même lorsque le téléphone portable est reçu dans la coque de protection 20.

Lors du clipsage, la patte 31 de la façade amovible 30 se déforme pour passer sur une protubérance de l'empreinte de clipsage 22 et y être retenue. On peut envisager d'ajouter une fente ou des rainures dans la patte de clipsage 31, en regard de la protubérance, pour obtenir un effet de retenue supplémentaire.

Le dispositif de protection forme alors un ensemble protégeant efficacement le téléphone portable 10, tout en permettant une personnalisation aisée, avec la façade amovible qui peut être changée aisément.

On peut envisager de proposer à l'utilisateur des façades amovibles de différentes couleurs ou avec des impressions sérigraphiées, pour changer l'apparence du dispositif de protection. On peut également envisager de proposer des façades amovibles 30 avec des éléments techniques, tels qu'une batterie, un haut parleur, des objectifs de photographie qui recouvrent l'objectif de l'appareil photo du téléphone portable 10. Cela permet de proposer de nouvelles fonctions à l'utilisateur.

La figure 3 représente le dispositif de protection de la figue 2, mais avec la façade amovible 30 clipsée dans une autre position. En effet, deux interfaces de clipsage 23 sont prévues dans l'empreinte de clipsage 22. Ces deux interfaces de clipsage sont prévues de part et d'autre de la fente d'accès 24, de sorte qu'il est possible de clipser la façade amovible 30 dans un sens (comme sur la figure 2), ou dans un autre (comme sur la figure 3). Si la façade amovible 30 comprend un rabat articulé pour former un étui de protection du téléphone portable 10, alors il suffit de clipser la façade amovible 30 dans un sens pour obtenir un étui dont l'ouverture est adaptée à un droitier, ou dans l'autre sens pour obtenir une ouverture adaptée à un gaucher.

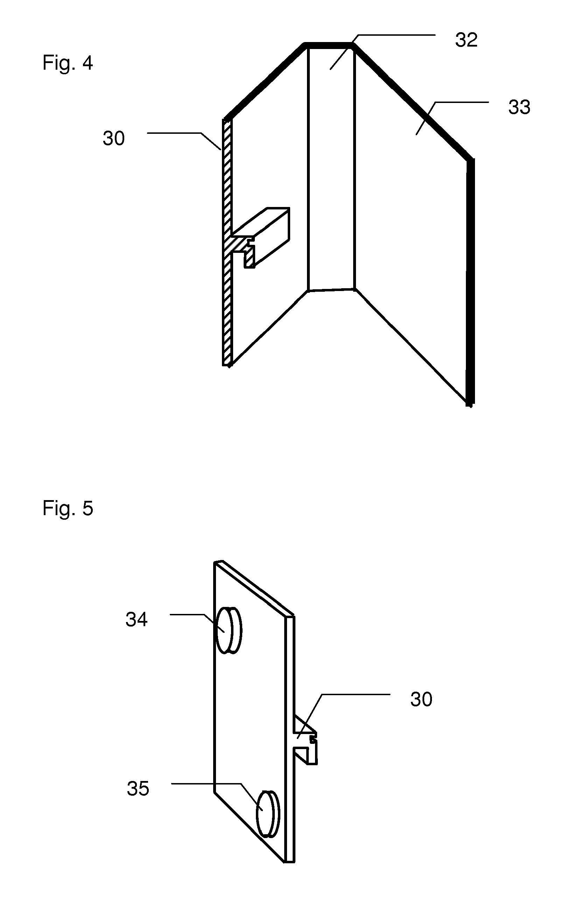

La figure 4 représente un exemple de façade amovible 30 lorsqu'elle comporte un rabat 33. Dans ce cas, la façade amovible 30 présente une articulation 32 qui forme une tranche, à laquelle est relié un rabat 33. Lorsque la façade amovible 30 est clipsée sur la coque de protection 20, alors le dispositif de protection forme un étui de protection, dont la coque de protection protège une face pour le téléphone portable 10, et le rabat 33 protège l'autre face. Comme indiqué au paragraphe ci-dessus, en changeant le sens de clipsage sur la coque de protection 20, alors, on peut adapter le sens d'ouverture du rabat 33 pour un droitier ou pour un gaucher.

La figure 5 représente un exemple de façade amovible 30 lorsqu'elle comporte deux dispositifs optiques 34 et 35, disposés chacun dans un coin de la façade amovible 30. Ces dispositifs optiques 34 et 35 sont agencés de sorte à être en regard avec une lentille externe d'un appareil photo du téléphone portable 10. Lorsque la façade amovible 30 est montée comme dans le sens représenté sur la figure 2, alors c'est par exemple le dispositif optique 34 qui est en regard de la lentille externe de l'appareil photo du téléphone portable 10, et lorsque la façade amovible 30 est montée comme dans le sens représenté sur la figure 3, alors c'est le dispositif optique 35 qui est en regard de la lentille externe de l'appareil photo du téléphone portable 10. L'invention permet de proposer deux dispositifs optiques différents qui permettent l'un (le dispositif optique 34) d'obtenir un objectif macro par exemple lorsqu'il est en regard de la lentille externe de l'appareil photo du téléphone portable 10, et l'autre (le dispositif optique 35) un objectif grand angle par exemple.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un téléphone portable, mais on peut envisager de mettre en oeuvre l'invention pour un dispositif de protection d'une tablette tactile par exemple, ou pour une console de jeu vidéo portable.

## Revendications

1. Dispositif de protection d'appareil électronique portable comprenant :
- une coque de protection (20) agencée pour recevoir l'appareil électronique portable,
- au moins une façade amovible (30) agencée pour être fixée sur la coque de protection (20),
**caractérisé en ce que** la coque de protection (20) comprend :
- une paroi (21) avec une face interne agencée pour être en regard de l'appareil électronique portable reçu par la coque de protection (20),
- au moins une empreinte de clipsage (22) agencée dans la paroi (21) et débouchant sur la face interne,
- au moins une ouverture d'accès à ladite au moins une empreinte de clipsage (22), dans la paroi (21),
et **en ce que** la façade amovible (30) comprend au moins une patte de clipsage (31) agencée pour pouvoir passer dans ladite au moins une ouverture d'accès et se clipser dans ladite au moins une empreinte de clipsage (22) lorsque l'appareil électronique portable est reçu par la coque de protection (20).

2. Dispositif selon la revendication précédente, dans lequel l'empreinte de clipsage (22) comprend au moins deux interfaces de clipsage (23) chacune agencée d'un côté de l'ouverture d'accès, pour permettre à ladite au moins une patte de clipsage (31) de se clipser d'un côté ou de l'autre de l'ouverture d'accès.

3. Dispositif selon la revendication précédente, dans lequel l'ouverture d'accès est une fente (24) définissant un axe longitudinal, et dans lequel l'empreinte de clipsage (22) est symétrique par rapport à l'axe longitudinal de la fente (24).

4. Dispositif selon la revendication 1, dans lequel l'empreinte de clipsage (22) présente un centre de symétrie.

5. Dispositif selon l'une des revendications précédentes, dans lequel ladite au moins une patte de clipsage (31) présente une hauteur de patte, dans lequel la paroi (21) présente une épaisseur de paroi (21), et dans lequel la hauteur de patte est inférieure à l'épaisseur de paroi (21).

6. Dispositif selon l'une des revendications précédentes, dans lequel la façade amovible (30) comprend une articulation et un rabat pour former un étui de protection de l'appareil électronique portable lorsqu'elle est clipsée sur la coque de protection (20).

7. Dispositif selon l'une des revendications précédentes, dans lequel la façade amovible (30) comprend une batterie auxiliaire pour augmenter l'autonomie de l'appareil électronique portable.

8. Dispositif selon l'une des revendications précédentes, dans lequel la façade amovible (30) comprend au moins un dispositif optique (34, 35) agencé pour s'ajuster sur un objectif d'appareil photo de l'appareil électronique portable, lorsque la façade amovible (30) est clipsée sur la coque de protection (20) recevant l'appareil électronique portable.

9. Dispositif selon la revendication précédente, dans lequel la façade amovible (30) est agencée pour se clipser selon deux positions différentes sur la coque de protection (20), et dans lequel la façade amovible (30) comprend deux dispositifs optiques (34, 35) chacun agencé pour s'ajuster sur l'objectif d'appareil photo de l'appareil électronique portable lorsque la façade est clipsée dans l'une des deux positions de clipsage sur la coque de protection (20).

10. Dispositif selon l'une des revendications précédentes, dans lequel la façade amovible (30) comprend au moins un haut parleur.

11. Dispositif selon l'une des revendications précédentes, dans lequel la façade amovible (30) comprend au moins une interface de fixation sur un pare brise de véhicule automobile.

12. Dispositif selon l'une des revendications précédentes, dans lequel la façade amovible (30) comprend au moins une interface de stockage d'un casque audio.

13. Dispositif selon l'une des revendications précédentes, dans lequel la façade amovible (30) comprend des moyens élastiques agencés entre deux portions d'ancrage et tendus au dessus d'au moins une partie d'une face externe de la façade amovible (30).
